# EUROPEAN PATENT APPLICATION

(11) **EP 1 278 128 A2**
(43) Date of publication of application: **22.01.2003**
(21) Application number: 02015672.5
(22) Date of filing: 17.07.2002
(51) Int. Cl.: G06F 15/80

(54) **Systolic array device**

(30) Priority: 19.07.2001 JP 2001220035
(71) Applicant: NTT DoCoMo, Inc., Tokyo 100-6150 (JP)
(72) Inventor: Asai, Takahiro, NTT DoCoMo, Inc. Intel.Prop.Dept., Chiyoda-ku, Tokyo 100-6150 (JP); Matsumoto, Tdadashi, NTT DoCoMo, Inc. Int.Pty.Dep., Chiyoda-ku, Tokyo 100-6150 (JP); Tomisato, Shigeru, NTT DoCoMo, Inc.Intel.Prop, Chiyoda-ku, Tokyo 100-6150 (JP)
(74) Representative: Bockhorni, Josef, Dipl.-Ing.

(57) **Abstract**

When a plurality of reference signal series are handled with the same input signal series during processing of an RLS algorithm based on QR decomposition, an object is to handle the plurality of reference signal series simultaneously. When performing processing of a sequential least-squares algorithm based on QR decomposition, to a configuration comprising a plurality of boundary cells (empty circles) which calculate appropriate rotation parameters for transformations based on Givens rotation, a plurality of internal cells (squares) which cause rotation of elements of a received data vector using the calculated values of the boundary cells (empty circles), and a final cell (double circles) which derives the a posteriori estimated error from the calculated values of the boundary cells (empty circles) and internal cells (squares), additional internal cells (squares) within 21 are connected so as to receive signals output from each of the internal cells (squares) arranged in the end cell column to which the signal series is input, and to the final cell (double circles) is connected an additional final cell (double circles) within 21, so as to receive the calculated values from the boundary cells (empty circles) and the calculated values from the additional internal cells (square) input to the additional final cell (double circles).

## Description

### BACKGROUND OF THE INVENTION

### Field of the Invention

This invention relates to a systolic array device which performs the processing of a sequential least-squares (RLS) algorithm based on QR decomposition, enabling the simultaneous acquisition of outputs for a plurality of reference signal series in the same input signal series.

### Related Background Art

In the prior art, a variety of algorithms are used to control the tap coefficients in an adaptive filter comprised by a transversal filter (delay line with taps) ; however, the RLS algorithm is known for its good convergence characteristics. The quantity of computations using the RLS algorithm increases in proportion to the square of the number of taps to be controlled. Hence when there is a large number of taps, the quantity of computations becomes extremely great. Hence as described for example in the reference Adaptive Filter Theory (Third Edition) Simon Haykin, PRENTICE HALLS, Upper Saddle River, New Jersey 07458 translation editor Hiroshi Suzuki, Science Press, Inc., systolic arrays are known which reduce processing time by parallel implementation of an RLS algorithm based on QR decomposition.

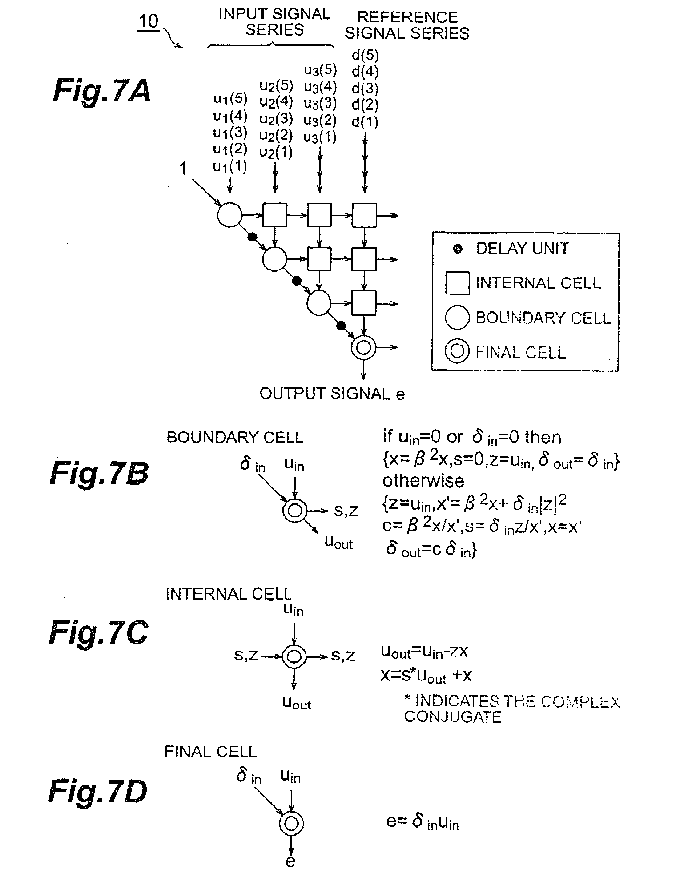

Fig.7A shows an example of the configuration of a basic systolic array of the prior art, which is here explained. The systolic array device 10 shown in Fig.7A has a configuration for the case of three taps, and is configured to comprise boundary cells, indicated by empty circles; internal cells, indicated by squares; final cells, indicated by double circles; and delay units, indicated by filled circles. In the literature, normally the symbol used for final cells is an "x" within a circle; here, however, a double-circle symbol is used.

Boundary cells (empty circles) and internal cells (squares) perform transformations based on a Givens rotation; boundary cells (empty circles) calculate an appropriate rotation parameter, and this calculated value is passed to an internal cell (square); the internal cell (square) uses the calculated value to rotate the elements of the received data vector. The final cells (double circles) derive the a posteriori estimated error.

Specifically, when for example all the boundary cells (circles) have uᵢₙ=0 or δᵢₙ=0, as shown in Fig. 7B, the operations {x=β²x, s=0, z=uᵢₙ, **δ**ₒᵤₜ=δᵢₙ} are performed; in addition, the operations {z=uᵢₙ, x'=β²x+δᵢₙ|z|², c=β²x/x', s=δᵢₙz/x', x=x', δₒᵤₜ=cδᵢₙ} are performed, and the value of x obtained in these operations is held.

All the delay units (filled circles) delay the time for input to the next-stage cell of the signal δₒᵤₜ output from a boundary cell (empty circles) by one operation processing time period.

All the internal cells (squares) perform, for example, the operations uₒᵤₜ=uᵢₙ-zx, x=s*uₒᵤₜ+x as shown in Fig.7C, and hold the value of x obtained in these operations. Here * indicates the complex conjugate. The specifics of the operations performed in all the internal cells (squares) are described in the above-cited reference . As shown in Fig. 7C, the final cells (double circles) perform the operation e=δᵢₙuᵢₙ, and output the result. These formulae are described in detail in the Adaptive Filter Theory reference cited above.

Fig.7A shows, for simplicity, signals from time 1 to time 5. The input signal series for the first tap is u₁(1), u₁(2), u₁(3), u₁(4), u₁(5); the input signal series for the second tap is u₂(1), u₂(2), u₂(3), u₂(4), u₂(5); and the input signal series for the third tap is u₃(1), u₃(2), u₃(3), u₃(4), u₃(5).

Numerals within the parentheses indicate the time. The a posteriori estimated error signal for these input signal series u₁(1) to u₁(5), u₂(1) to u₂(5), u₃(1) to u₃(5) and for the reference signal series d(1), d(2), d(3), d(4), d(5) is output from the final cell (double circles) as the output signal e. By using a method called a serial weight flushing, the values of tap coefficients can also be obtained as an output signal e.

### SUMMARY OF THE INVENTION

However, in systolic array devices of the prior art, as described in the above-cited reference, while there are various configurations for systolic arrays which perform parallel processing of an RLS algorithm based on QR decomposition, in all configurations there is only one signal series input as a reference signal series, and a plurality of reference signal series cannot be handled simultaneously.

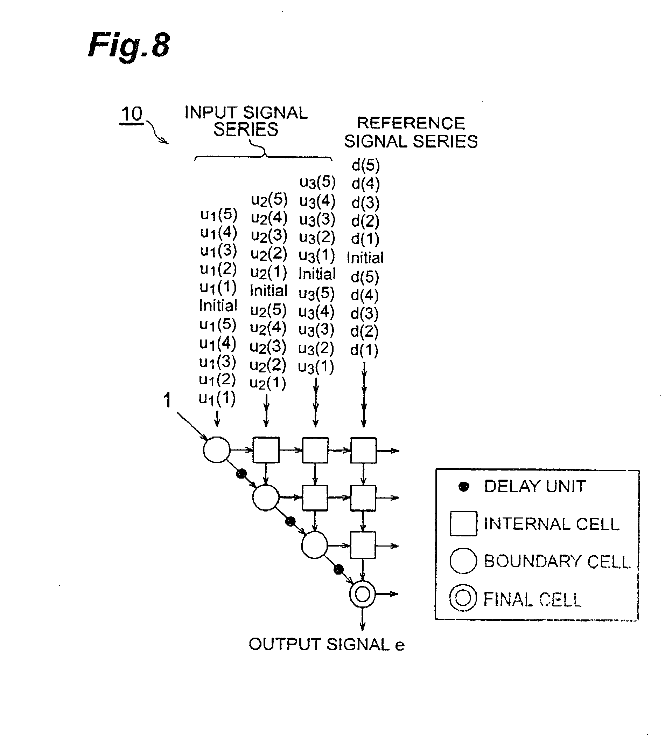

Hence when using a conventional systolic array device 10 to process a plurality of reference signal series with the same input signal series, the respective processing must be performed separately. Fig.8 shows the case in which two types of reference signal series are handled with three taps.

Suppose that the input signal series for the first tap is u₁(1), u₁(2), u₁(3), u₁(4), u₁(5) ; the input signal series for the second tap is u₂(1), u₂(2), u₂(3), u₂(4), u₂(5); and the input signal series for the third tap is u₃(1), u₃(2), u₃(3), u₃(4), u₃(5).

At this time, when deriving the output signal e given that the reference signal series is d(1), d(2), d(3), d(4), d(5) and the output signal e' given that the input signal series u₁(1) to u₁(5), u₂(1) to u₂(5), u₃(1) to u₃(5) are the same and that the reference signal series is d'(1), d'(2), d'(3), d'(4), d'(5), first d(1) to d(5) is used as the reference signal series to perform a series of processing and derive the output signal e.

Next, when the signals Initial (in the figure, Initial signals are denoted by an underbar) are input to each cell, the value held by the cell is initialized. Thereafter, the reference signal series d' (1) to d'(5), and the same input signal series as the previously used input signal series, must be used to perform processing.

In this way, in the conventional systolic array 10, when the input signal series u₁(1) to u₁(5), u₂(1) to u₂(5), u₃(1) to u₃(5) are the same and a plurality of reference signal series d(1) to d(5) and d'(1) to d'(5) are handled, there is the problem that the respective processing must be performed separately.

The present invention was devised in light of the above, and has as an object the provision of a systolic arrav device which, in cases where the same input signal series is handled with a plurality of reference signal series when performing RLS algorithm processing based on QR decomposition, is able to simultaneously handle the plurality of reference signal series.

To resolve the above problem, a systolic array device of this invention, in order to perform processing of a sequential least-squares algorithm based on QR decomposition, has a plurality of boundary cells which calculate appropriate rotation parameters for transformation based on Givens rotation; a plurality of internal cells which use values calculated by boundary cells to cause rotation of the elements in a received data vector; and a final cell which derives the posteriori estimated error from the calculated values of the above boundary cells and the above internal cells; and is characterized in comprising a plurality of additional internal cells, connected to each of the above internal cells arranged in the end cell column to which signal series are input such that signals output from the above internal cells are passed to the plurality of additional internal cells, and an additional final cell, connected to the above final cell so as to receive calculated values from said final cell that contains values calculated from boundary cell and so as to receive calculated values from said additional internal cells.

By means of this configuration, a cell column having a plurality of additional internal cells and an additional final cell is added to the end cell column, so that by simultaneously inputting, to both the above end cell column and to the added cell column, different reference signal series, a posteriori estimated errors for the input signal series and each of the reference signal series can simultaneously be derived.

Further, a systolic array device of this invention comprising additional final cells and a plurality of stages of the additional internal cells, wherein a plurality of stages of said additional internal cells are connected so as to receive, in succession, signals output from said internal cells and the additional final cells being connected for each connected additional internal cell stage; and calculated values from the boundary cells and calculated values from additional internal cells connected to the additional final cell are received by each connected additional final cell.

According to this configuration, a plurality of stages of cell columns are added to the cell column added to the end cell column, so that a posteriori estimated errors for input-signal series and each of the types of reference signal series according to the number of stages can be derived simultaneously.

Also, a systolic array device of this invention is characterized in that a plurality of stages of additional internal cells are connected so as to directly receive signals output from the above internal cells; additional final cells are connected to each of these stages of connected additional internal cells; and, calculated values from boundary cells and calculated values from additional internal cells connected to the additional final cells in question are passed to each of the connected additional final cells.

According to this configuration, a plurality of stages of cell columns are added to the cell column added to the end cell column, so that a posteriori estimated errors for input-signal series and each of the types of reference signal series according to the number of stages can be derived simultaneously. And, the calculated values of internal cells are passed directly to the respective additional internal cells, so that reference signals can be input simultaneously to the respective additional internal cells. As a result, no delay occurs in the timing for output of computation results from the respective final cells, so that this configuration is particularly advantageous when there are numerous additional cell columns.

Also, a synchronization capture device in the communications of this invention uses the above systolic array device, and is characterized in that received-signal series are input to the boundary cell and internal cells in this systolic array device to which input signal series are input, and a plurality of known signal series, generated in advance by changing the timing of a known signal series by a fixed amount of time, is input to the end internal cells and to the additional internal cells.

By means of this configuration, a posteriori estimated errors are obtained simultaneously for the received signal series and a plurality of known signal series, and thereafter, by applying a well-known function which takes as the synchronization point the timing of the known signal series resulting in the smallest error power, synchronization capture can be performed in a short length of time.

Further, a synchronization capture device of this invention in communications uses the above systolic array device, and is characterized in that received signal series are input to the internal cells and boundary cells in the systolic array device to which input signal series are input, and a plurality of known signal series in advance is input with the same timing to the end internal cells and additional internal cells.

By means of this configuration, a posteriori estimated errors are obtained simultaneously for the received signal series and a plurality of known signal series, and theroafter, by applying a well-known function which takes as the synchronization point the timing of the known signal series resulting in the smallest error power, synchronization capture can be performed in a short length of time. Moreover, the known signal series are input simultaneously to the respective additional internal cells, so that no delay occurs in the timing for output of computation results from the respective final cells, and processing speeds can be increased, so that this configuration is particularly advantageous when there are numerous additional cell columns.

Further, an adaptive array antenna device of this invention employs the above systolic array device, and is characterized in that received-signal series are input to the boundary cell and internal cells in the systolic array device to which input-signal series are input, and a known signal series with timing coordinated with an advanced wave, and a known signal series with timing coordinated with a delayed wave with various delay times, are input to the end internal cells and the additional internal cells.

By means of this configuration, the tap coefficient which takes into consideration the advanced wave and the tap coefficient which takes into consideration the delayed wave can be derived simultaneously, so that in an adaptive array antenna control algorithm which combines and uses the tap coefficient considered for an advanced wave and the tap coefficient considered for a delayed wave, processing can be performed in a short length of time.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a block diagram showing the configuration of a systolic array device of an aspect of the invention;
Fig. 2A is a block diagram showing the configuration, in a systolic array device of the above aspect, in which there are three taps and two types of reference signal series are handled;
Fig. 2B is a figure showing the function of a final cell;
Fig. 3A is a figure showing an example of the input-signal series and reference signal series value;
Fig. 3B is a figure showing the result of the output signal obtained by the prior systolic array device;
Fig. 3C is a figure showing the result of the output signal obtained by the systolic array device of an aspect of the invention;
Fig. 4 is a figure showing an example in which the systolic array device of the above example is used for synchronization capture in communications;
Fig. 5 is a figure showing an example in which the systolic array device of the above example is used for directionality control in an adaptive array antenna;
Fig. 6 is a block diagram showing the configuration of a systolic array device of an aspect of the invention;
Fig. 7A is a block diagram showing the configuration of a basic systolic array device of the prior art;
Fig. 7B is a figure showing the function of a boundary cell;
Fig. 7C is a figure showing the function of an internal cell;
Fig. 7D is a figure showing the function of a final cell; and,
Fig. 8 is a block diagram showing the configuration of a systolic array device when simultaneously processing two types of reference signal series with three taps in the prior art.

### DESCRIPTION OF THE PREFERRED EMBODIMENTS

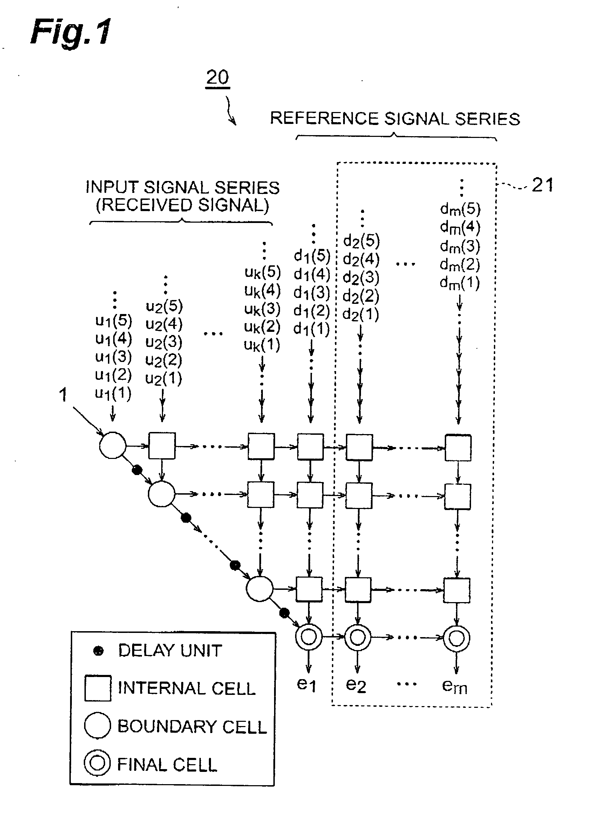

Fig. 1 is a block diagram showing the configuration of a systolic array device of an aspect of the invention. A characteristic of the systolic array device 20 of the invention shown in Fig. 1 lies in a configuration whereby m types of reference signal series are simultaneously processed using k taps. That is, in this configuration the plurality of internal cells (squares) and final cells (double circles) surrounded by the dotted-line frame 21 have been added.

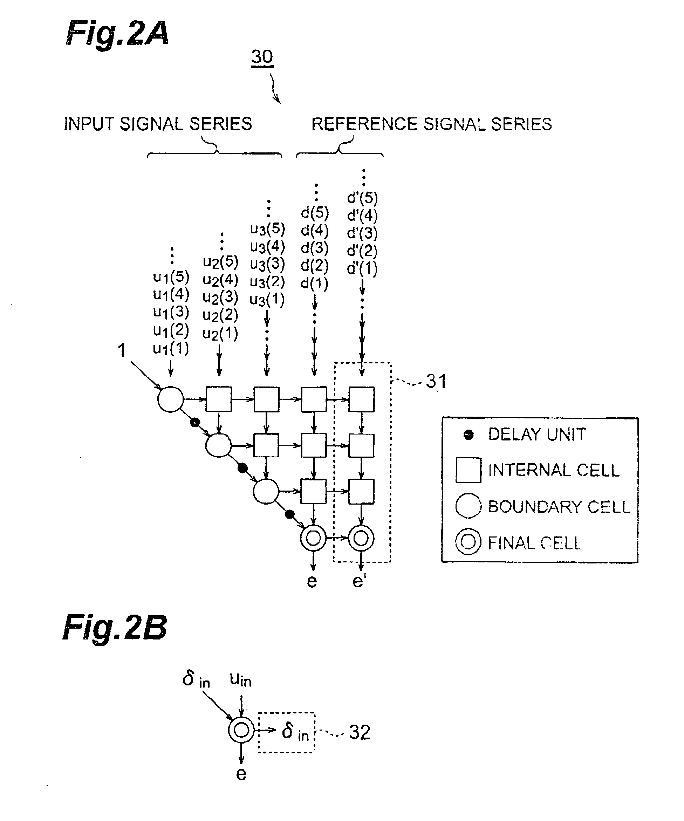

In order to explain this configuration in an easily understood manner, Fig.2A shows a configuration in which two types of reference signal series are simultaneously processed using three taps; this is explained below. In Fig.2A, the systolic array device 30 has second reference signal input cell column consisting of internal cells (square) to receive the second reference signal series d'(1) to d'(5) and a final cell (double circle), surrounded by the dotted line frame 31. The second reference signal input cell column is arranged to the right of the first reference input cell column which and receive the first reference signal series d(1) to d(5) from the conventional systolic array device 10 shown in Fig.7A. The arrangement of second signal input cell column is similar to that of the first reference input cell column. Additional function of the final cell (double circle) in the first reference input cell column is to pass the input signal δᵢₙ to the final cell (double circle) adjacent to the right as shown by the dotted-line frame 32 shown in Fig.2B. Also, each of the internal cells (squares) in the first reference input cell column is connected so as to pass the signals s, z shown in Fig. 7C to the right-adjacent internal cell in the second reference input cell column.

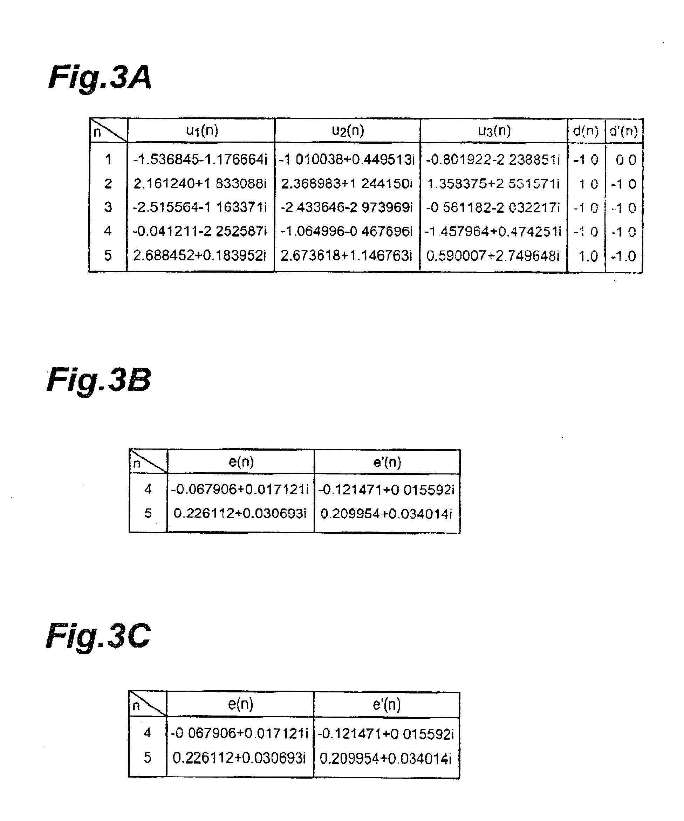

Results confirmed by computer programming for the operation of a systolic array device 30 configured in this way are shown in Fig. 3. That is, the number of taps is three, and output signals e, e' are derived for two types of reference signal series. Using the input signal series u₁, u₂, u₃ and the reference signal series d, d' shown in Fig.3A, Fig.3B shows the results of derivation separately of the output signals e, e' using the systolic array device 10 of the prior art; Fig.3C shows the results of simultaneous derivation of the output signals e, e' using the systolic array device 30 of this invention.

The two results have the same value. In principle, the output signals e(1), e(2), e(3) and e'(1), e'(2), e'(3) of the first taps are not derived. Hence the figure only shows output signals e(4), e(5) and e'(4), e'(5). From this, it is confirmed that the systolic array device 10 of this invention can handle a plurality of reference signal series simultaneously.

If configured according to a similar principle, there is no limit to the number of taps k and the number of reference signals series m as shown in Fig. 1.

In this way, by means of the systolic array device of this aspect, when performing processing of a sequential least-squares algorithm based on QR decomposition, a systolic array device is configured in which, to a configuration comprising a plurality of boundary cells (empty circles) which calculate appropriate rotation parameters for transformations based on Givens rotation, a plurality of internal cells (squares) which rotate the elements of received data vectors using the values calculated by the boundary cells (empty circles), and a final cell (double circles) which derives the a posterior estimated error from the values calculated by the bounday cells (empty circles) and internal cells (squares), additional internal cells (squares) are connected to each of the internal cells (squares) arranged in the end cell column to which signal series are input, so as to receive the signals output from the internal cells (squares), and an additional final cell (double circles) is connected to the final cell (double circles) , so as to receive the calculated values from the boundary cell (empty circle) input to this cell (double circles) and the calculated values from the additional internal cells (squares).

In other words, a cell column, having a plurality of additional internal cells (squares) and an additional final cell (double circles), is added to the end cell column; hence by inputting different reference signal series simultaneously to both the end cell column and to the added cell column, the a posteriori estimated error signal for the input signal series and each of the input reference signal series can be derived simultaneously.

Also, a plurality of stages of additional internal cells (squares) are connected such that signals output from the internal cells (squares) are received in succesion; an additional final cell (double circles) is connected to each stage of additional internal cells (squares) ; and each of the connected additional final cells (double circles) receives a calculated value from a boundary cell (empty circle) and a calculated value from the additional internal cell (square) to which the additional final cell (double circles) is connected.

That is, there are further added a plurality of stages of cell columns to the cell column added to the end cell column, so that the a posteriori estimated error for the input signal series and each of the types of reference signal series corresponding to the number of stages can be derived simultaneously.

In this way, the systolic array device of this aspect can be utilized when using a systolic array to handle a plurality of reference signal series for the same input signal, and as explained below in a specific example, can be employed for synchronization capture in communications and for control of an adaptive array antenna in mobile communications. However, utilization is possible when handling a plurality of reference signal series for the same input signal series using a systolic array which performs RLS algorithm processing based on QR decomposition, and is not limited to the field of communications.

A case in which the systolic array device of this aspect is employed for synchronization capture in communications is explained.

For example, in the synchronization capture method described in the references *Idou tsuushin you adaputibu arei no fureemu douki kakuritsuhou to sono tokusei* (Establishment of frame synchronization and characteristic feature in adaptive array for mobile communication), Kazuhiko Fukawa, and "Separation of Cochannel Signals in TDMA Mobile Radio", A.V. Keerthi and J. Shynk, *IEEE Trans. on Signal Processing*, Vol. 46, No. 10, 1998, a signal series already known on the receiving side is transmitted by the transmitting side; on the receiving side, the timing of the known signal series is changed by one symbol each to generate a plurality of reference signal series; the posteriori estimated error for the plurality of reference signal series and the received signal series is calculated; and the timing of the reference signal series resulting in the smallest error power is taken to be the synchronization point.

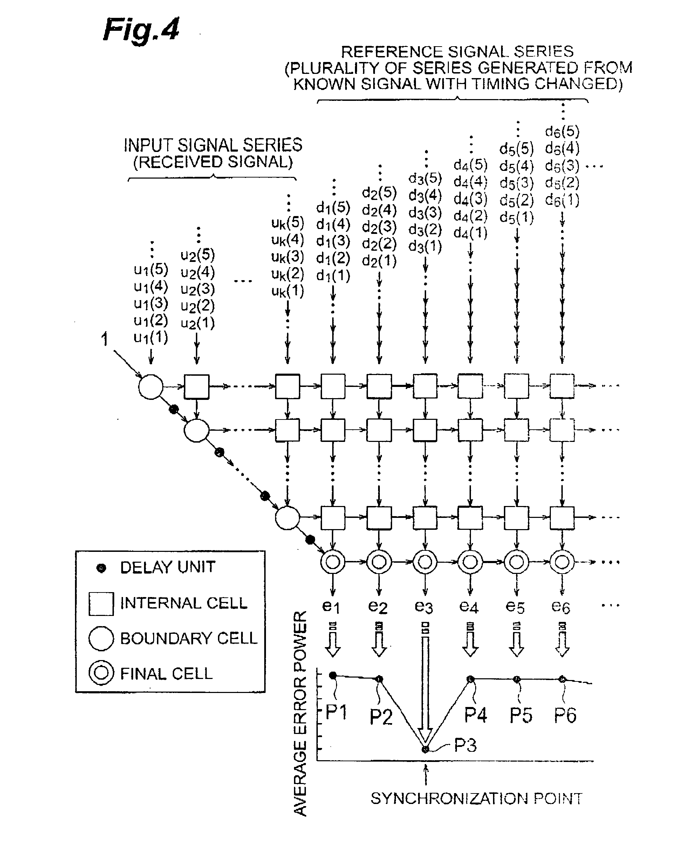

In this method, a plurality of posteriori estimated errors for the same input signal series and a plurality of reference signal series is required. Hence as shown in Fig. 4, the received signal is taken to be the input-signal series, the systolic array device of this aspect can calculate a posteriori estimated error signals simultaneously by taking received signal as the input-signel series and by taking a plurality of known signal series with timing different by one symbol each as a plurality of reference signal series.

That is, taking a plurality of series that results from changing the timing of a known signal series by one symbol each as reference signal series d₁, d₂, d₃, d₄, d₅, d₆, ... (where dₖ₊₁ is the series with dₖ coordinated timing delayed by one symbol), the systolic array device of this aspect can derive the corresponding a posteriori estimated error signals e₁, e₂, e₃, e₁, e₅, e₆, ... simultaneously. The average error powers P1, P2, P3, P4, P5, P6, ... for each of the error signals e₁, e₂, e₃, e₄, e₅, e₆, ... are calculated, and the timing resulting in the smallest value (in this example, p3) is taken to be the synchronization point. Thus in this way, the present invention can be used for synchronization capture in communications.

Next, a case in which the systolic array device of this aspect is used in control of an adaptive array antenna in mobile communication is explained.

For example, as described in the reference *Aree antena ni yoru tekiou shingou shori* (adaptation signal processing by array antenna), Nobuyoshi Kikuma, Science Press, Inc., there are various algorithms for controlling the tap coefficients in each of the elements of an adaptive array antenna. Of these, it is known that methods using the RLS algorithm have good convergence characteristics.

With respect to calculation of the tap coefficients of each element in an adaptive array antenna using an RLS algorithm, when receiving only the advanced wave, which has been studied previously, a plurality of reference signal series is not handled. However, when employing control such as that described in for example the reference *"MMSE adaputibu aree antena to MLSE no juuzoku setsuzoku hou ni kansuru kenkyuu* (Investigation about MMSE adaptive antenna and a method of continuous connection)", Akito Hanaki, Takeo Ohkane and Yasutaka Ogawa, IEICE Tech. Rep., RCS98-42, pp. 39-45, June 1998, a plurality of reference signal series must be handled for the same input signal series.

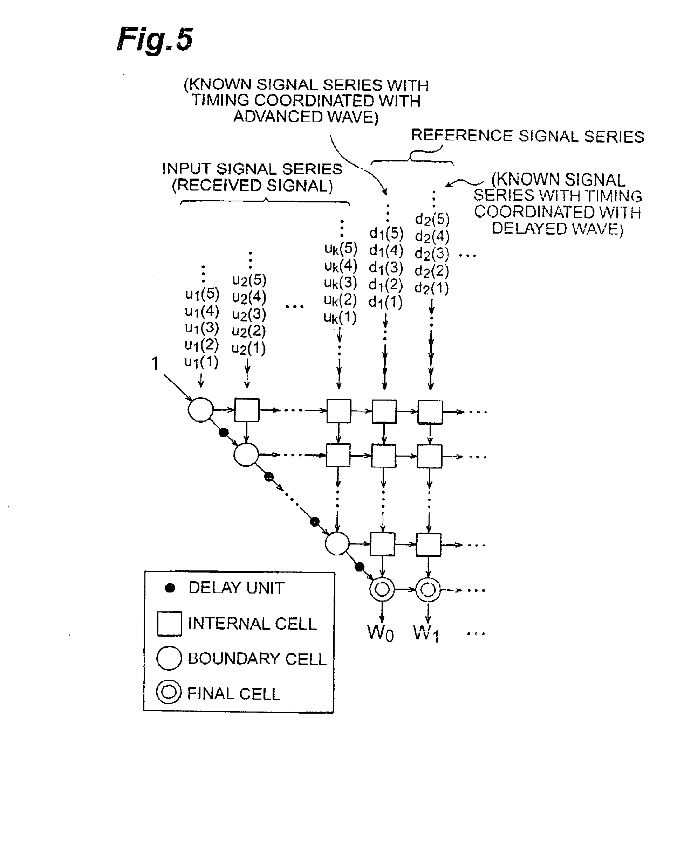

In the above reference by Hanaki et al, a tap coefficient which takes into consideration the advanced wave, and a tap coefficient which takes into consideration the delayed wave, are synthesized as the tap coefficient of each element in an adaptive array antenna to make effective use of the received power. Derivation of the tap coefficient which takes into consideration the advanced wave and the tap coefficient which takes into consideration the delayed wave can be performed by simultaneous calculations using the systolic array device of this aspect. This configuration, shown in Fig. 5, is explained below.

In Fig. 5, by using the received signals in each of the elements of the adaptive array antenna as the input-signal series u₁, u₂, ..., uₖ; and as the plurality of reference signal series d₁, d₂, ..., by using a known signal series with timing coordinated with the advanced wave, and known signal series with timing coordinated with delayed waves with various delay times, the tap coefficient wₙ which takes into consideration the advanced wave, and the tap coefficient w₁ which takes into consideration a delayed wave, can be derived simultaneously. In the method of the above reference by Hanaki et al, these tap coefficients are synthesized for use. In this way, the systolic array device of this aspect can be used in control of an adaptive array antenna.

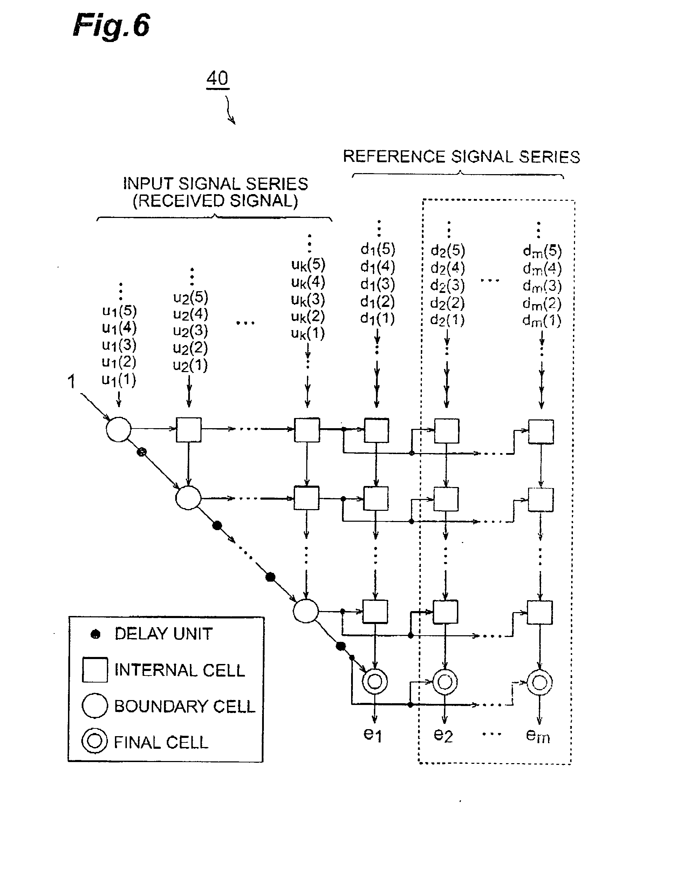

Next, the systolic array device of a second aspect of this invention is explained. Fig. 6 shows the configuration of the systolic array device 40 of the second aspect. The systolic array device 40 of the second aspect has essentially the same configuration as the systolic array device 20 of the first aspect, but differs in that each of the additional internal cells is connected in parallel with the internal cells arranged in the end cell column, configured such that calculation results are received directly from internal cells in the end column.

In the systolic array device 40 of the second aspect, similarly to the systolic array device 20 of the first aspect, a cell column having a plurality of additional internal cells (squares) and an additional final cell (double circles) is added to the end cell column, so that by simultaneously inputting different reference signal series into both the end cell column and into the added cell column, a posteriori estimated error signals for the input signal series and each of the input reference signal series can be simultaneously derived.

Further, a plurality of stages are connected such that signals output from internal cells (squares) are directly received by additional internal cells (squares), so that there is no need to shift the timing of each of the reference signal series input to the respective additional internal cells (squares). Also, no delay occurs in the timing with which computation results are output from each of the final cells, and consequently the processing speed can be further improved, so that this configuration is particularly advantageous when there are numerous additional cell columns.

Further, the systolic array device 40 of this aspect is not configured such that a final cell (double circles) receives the calculation result of an adjacent final cell (double circles); hence the final cells (double circles) need not have another output, and the final cells of conventional systolic array devices can be used.

Also, the systolic array device 40 of this aspect can be used in cases where a systolic array is employed to handle a plurality of reference signal series with the same input signal, so that similarly to the systolic array device 20 of the first aspect, use in synchronization capture for communication, and in control of adaptive array antennas for mobile communication, is possible.

As explained above, by means of this invention, a cell column having a plurality of additional internal cells and an additional final cell is added to the end cell column of a systolic array device which performs processing of an RLS algorithm based on QR decomposition, so that by the simultaneous input of different reference signal series to both the above end cell column and to the added cell column, the posteriori estimated errors for the input signal series and each of the input reference signal series can be derived simultaneously. That is, when handling a plurality of reference signal series with the same input signal series in processing of an RLS algorithm based on QR decomposition, the plurality of reference signal series can be handled simultaneously.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A systolic array device, having a plurality of boundary cells which calculate appropriate rotation parameters for transformations based on Givens rotation, a plurality of internal cells which cause rotation of the elements of a received data vector using the calculated values of the boundary cells, and a final cell which derives the posteriori estimated error from the calculated values of said boundary cells and said internal cells, in order to perform processing of a sequential least-squares algorithm based on QR decomposition; comprising
a plurality of additional internal cells, connected to each of said internal cells arranged in the end cell column to which signal series are input, so as to receive signals output from said internal cells; and,
an additional final cell, connected to said final cell so as to receive calculated values from said final cell that contains values calculated from boundary cell and so as to receive calculated values from said additional internal cells.

2. The systolic array device according to claim 1, comprising additional final cells and a plurality of stages of said additional internal cells, wherein a plurality of stages of said additional internal cells are connected so as to receive, in succession, signals output from said internal cells and said additional final cells being connected for each connected additional internal cell stage; and calculated values from said boundary cells and calculated values from additional internal cells connected to the additional final cell are received by each connected additional final cell.

3. The systolic array device according to claim 1, comprising additional final cells and a plurality of stages of said additional internal cells, wherein a plurality of stages of said additional internal cells are connected so as to receive, directory, signals output from said internal cells and said additional final cells being connected for each connected additional internal cell stage; and calculated values from said boundary cells and calculated values from additional internal cells connected to the additional final cell are received by each connected additional final cell.

4. A synchronization capture device, using a systolic array device according to claim 1 or claim 2, wherein received-signal series are input to the boundary cells and internal cells in the systolic array device to which input-signal series are input, and a plurality of known signal series, generated in advance from a known signal series with timing changed by a fixed amount of time each, are input to the end internal cells and the additional internal cells.

5. A synchronization capture device, using the systolic array device according to claim 1 or claim 3, wherein received-signal series are input to the boundary cells and internal cells in the systolic array device to which input-signal series are input, and a plurality of signal series known in advance are input with the same timing to the end internal cells and additional internal cells.

6. An adaptive array antenna device, using a systolic array device according to any of claims 1 to 3, wherein received-signal series are input to the boundary cells and internal cells in the systolic array device to which input-signal series are input, and a known signal series with timing coordinated with an advanced wave and a known signal series with timing coordinated with delayed waves with various delay times are input to the end internal cells and the additional internal cells.
